# EUROPÄISCHE PATENTSCHRIFT

(11) **EP 2 563 545 B1**
(45) Veröffentlichungstag und Bekanntmachung des Hinweises auf die Patenterteilung: **07.08.2019**
(21) Anmeldenummer: 11706475.8
(22) Anmeldetag: 23.02.2011
(51) Int. Cl.: B23K 37/04, B23K 26/24, F16B 5/06, F16B 5/08, B62D 65/02

(54) **VERFAHREN ZUM VERBINDEN ZWEIER FAHRZEUGBAUTEILE BZW. ZWEIER NICHTFAHRZEUGBAUTEILE**
METHOD FOR CONNECTING TWO VEHICLE COMPONENTS OR TWO NON-VEHICLE COMPONENTS
PROCÉDÉ DE LIAISON DE DEUX PIÈCES STRUCTURALES D'UN VÉHICULE OU DE DEUX PIÈCES STRUCTURALES QUELCONQUES

(30) Priorität: 28.04.2010 DE 102010028323; 28.04.2010 DE 102010028322
(43) Veröffentlichungstag der Anmeldung: 06.03.2013
(73) Patentinhaber: Bayerische Motoren Werke Aktiengesellschaft, 80809 München (DE)
(72) Erfinder: HAMMER, Maik, 84174 Eching (DE); VAN NIEKERK, Johann, 80993 München (DE); HERZINGER, Thomas, 80639 München (DE)
(86) Internationale Anmeldenummer: PCT/EP2011/000864
(87) Internationale Veröffentlichungsnummer: WO 2011/134563

(56) Entgegenhaltungen:
- EP-A1- 0 173 656
- EP-A1- 2 154 054
- WO-A1-2006/051022
- FR-A1- 2 761 626
- US-A- 2 275 900
- US-A- 4 637 116
- WANG P C ET AL: "A COMPARISON OF FATIGUE STRENGTHS: LASER BEAM VS. RESISTANCE SPOT WELDS", WELDING JOURNAL, AMERICAN WELDING SOCIETY, MIAMI, FL, US, vol. 70, no. 10, 1 October 1991 (1991-10-01), pages 43-47, XP000243950, ISSN: 0043-2296

## Beschreibung

Die vorliegende Erfindung betrifft ein Verfahren zum Verbinden zweier Fahrzeugbauteile gemäß dem Oberbegriff des Patentanspruches 1 bzw. ein Verfahren zum Verbinden zweier Nichtfahrzeugbauteile gemäß dem Oberbegriff des Patentanspruches 20.

Ein Verfahren gemäß dem Oberbegriff des Patentanspruches 1 ist aus der FR 2 761 626 A1 bekannt. Zum technischen Hintergrund der vorliegenden Erfindung zählen die EP 2 154 054 A1, WO 2006/051022 A1, US, 4,637,116 A, US 2,275,900 A, EP 173656 A1 sowie WANG P C ET AL: " A COMPARSION OF FATIGUE STRENGTHS: LASER BEAMS VS. RESISTANCE SPOT WELDS", WELDIING JOURNAL, AMERICAN WELDING SOCIETY, MIAMI, FL, US, Bd. 70, NR. 10, 1. Oktober 1991 (1991-10-01), Seiten 43-47, XP000243950, ISS: 0043-2296.

Ebenfalls zum relevanten Stand der Technik der vorliegenden Erfindung zählt die ältere, nicht vorveröffentlichte deutsche Patentanmeldung DE 10 2009 049 602.5 der Bayerische Motoren Werke Aktiengesellschaft.

In der Großserienfertigung von Fahrzeugkarosserien werden eine Vielzahl einzelner Karosserieteile sowie Anbauteile, wie z.B. Halterungen etc. weitgehend automatisiert zusammengebaut. Bei einem Fügevorgang werden zwei oder mehrere Karosserieteile zunächst relativ zueinander positioniert und anschließend miteinander verbunden, z.B. durch Schweißen, Clinchen oder durch andere Fügeverfahren. Um einen vorgegebenen Fügespalt einzuhalten, ist eine aufwändige Spann- und Fixiertechnik erforderlich, die individuell für die zu fügenden Bauteile konzipiert und eingestellt werden muss.

Die Spanntechnik fixiert die zu fügenden Bauteile in kaltem Zustand. Werden die Bauteile anschließend miteinander verschweißt, so können die dabei auftretenden Wärmedehnungen zu einer Relativverschiebung der Bauteile führen. Häufig ändert sich dabei der Fügespalt, was sich ungünstig auf die Festigkeit der Schweißverbindung auswirkt.

Bei der eingangs erwähnten DE 10 2009 049 602.5 geht es um eine lose Vorfixierung zweier fest miteinander zu verbindender Bauteile. Hierzu ist an dem einen Bauteil ein abstehendes kugelförmiges Formschlusselement vorgesehen, das in eine z.B. schlüssellochartig gestaltete Ausnehmung des zweiten Bauteils eingreift. Die beiden miteinander zu verbindenden Bauteile werden zusammengesetzt und anschließend relativ zueinander verschoben. Durch das Verschieben wird ein Formschluss zwischen dem kugelförmigen und Formschlusselement und der schlüssellochartigen Ausnehmung erzeugt. Durch den Formschluss werden die beiden Bauteile hinreichend fest und in definierter Position relativ zueinander vorfixiert, so dass sie anschließend ohne weitere Spannwerkzeuge fest miteinander verbunden werden können, z.B. durch Schweißen.

Aufgabe der Erfindung ist es, ein Verfahren zum Verbinden, insbesondere zum Verschweißen, zweier Fahrzeugbauteile bzw. zweier Nichtfahrzeugbauteile anzugeben, bei dem die zu verbindenden Bauteile in einfacher und vorteilhafter Weise relativ zueinander positioniert werden.

Diese Aufgabe wird durch die Merkmale des Patentanspruches 1 bzw. 20 gelöst. Vorteilhafte Ausgestaltungen und Weiterbildungen der Erfindung sind den Unteransprüchen zu entnehmen.

Das Grundprinzip der Erfindung besteht darin, zwei miteinander zu verbindende bzw. zu verschweißende Fahrzeugbauteile bzw. Nichtfahrzeugbauteile durch Steck- bzw. Klemmverbindungen vorzupositionieren und in lösbarer Weise vorzufixieren. Anschließend können die vorfixierten Bauteile "dauerhaft fest", insbesondere stoffschlüssig, miteinander verbunden werden.. "Dauerhaft fest" können die beiden Fahrzeugbauteile bzw. Nichtfahrzeugbauteile z.B. durch Schweißen, Löten, Verschrauben oder durch andere Verbindungstechniken miteinander verbunden werden. "Dauerhaft fest" bedeutet in diesem Zusammenhang jedoch nicht notwendigerweise "unlösbar". Gemeint ist vielmehr, dass die vorfixierten Bauteile zusätzlich über ein oder mehrere Verbindungen miteinander verbunden werden, so dass insgesamt eine höhere Verbindungsfestigkeit erreicht wird, als allein mit den erfindungsgemäßen Verbindungselementen.

Der Begriff "Fahrzeugbauteil" ist äußerst breit zu interpretieren. Er umfasst eine Vielzahl von Arten von Bauteilen, die es bei der Herstellung eines Fahrzeugs zu verbinden gilt, insbesondere, aber nicht ausschließlich, Karosseriebauteile, sondern auch andere Bauteile, wie z. B. sogenannte "Anbauteile" von Fahrzeugen (Halteeinrichtungen für Nebenaggregate, etc). Der Begriff "Fahrzeuge" umfasst sowohl Personenkraftwagen als auch Nutzfahrzeuge, wie Lkw oder Schienenfahrzeuge, Motorräder, etc.

Der Begriff "Nichtfahrzeugbauteil" ist ebenfalls sehr breit zu interpretieren. Er umfasst grundsätzlich alle Arten von Bauteilen, die für Anwendungen außerhalb des Fahrzeug(bau)bereichs, insbesondere außerhalb des Straßenfahrzeug(bau)bereichs, bestimmt sind. Die Erfindung kann beispielsweise in folgenden Bereichen eingesetzt werden:
- Bereich "Weißer Ware", d. h. Herstellung von Haushaltsgeräten, wie z. B. Kühlschränken, Gefrierschränken, Gefriertruhen, Elektroherden, Waschmaschinen, Geschirrspülmaschinen, Wäschetrocknern usw., insbesondere Verbindung von für Haushaltsgeräte bestimmten (Blech-)Gehäusebauteilen.
   ∘ Gehäuseteile können zusammengesteckt werden, nicht nur zur Vorfixierung, sondern "die Kugel" kann gezielt als Fügeelement eingesetzt werden, das ein späteres Zerlegen ermöglicht.
   ∘ Kugel als standardisiertes Element für Montageteile, z. B. Isolationsmaterialien, Verkleidungsteile, Elektronik / Steuergeräte, Kabel.
   ∘ Beispielsweise kann die erfindungsgemäße Bauteilverbindung bei einem Kühlschrank oder Trockner als schwimmende Fixierung für Wärmetauscher o. ä. eingesetzt werden.
- Möbelherstellung, insbesondere Verbindung einzelner Möbelteile. Die Erfindung könnte z. B. eingesetzt werden bei der Herstellung von
   - Wohn- und Küchenmöbeln, Büromöbeln, Labormöbeln, Straßenmöbeln, Stadtmöbeln, Parkmöbeln, Gartenmöbeln, z. B. zur Positionierung und Vorfixierung von Struktur- und Montageteilen;
   - Blechbauteilen zur Vorfixierung von Bauteilen, um anschließend mit wenig Fügeelementen (z.B. Schrauben) zu fixieren;
   - Zur geometrischen Ausrichtung mehrerer Möbelteile über die Kugel (eine zweite Komonente/Möbelstück "rutscht" über die Kugel in die richtige Position relativ zu einer/einem ersten Komponente/Möbelstück) .
- Bauwirtschaft, insbesondere Verbindung einzelner Komponenten eines Hauses, wie z. B. Verbindung von Fassadenelementen. Befestigungs- Ankersysteme im Strukturbereich im Bau, z. B. Dachstrukturen. Demontierbare Messestände.
- Fluggerätebau, insbesondere Flugzeugbau, insbesondere Verbindung von Bauteilen von Fluggeräten.
- Spielzeugbereich, insbesondere Verbindung einzelner Spielzeugteile.

Die vorstehende Aufzählung von Anwendungsmöglichkeiten der Erfindung ist rein exemplarisch und keineswegs einschränkend zu verstehen.

Wenngleich die nachfolgende Beschreibung primär im Zusammenhang mit "Fahrzeugbauteilen" erfolgt, sei ausdrücklich darauf hingewiesen, dass sämtliche Teilaspekte der Erfindung auch auf den Bereich "Nichtfahrzeugbauteile" anwendbar sind. Insbesondere können Teilaspekte der Erfindung, die in Patentansprüchen enthalten sind, welche sich auf ein Verfahren zum Verbinden von Fahrzeugbauteilen beziehen, auch bei dem sich auf "Nichtfahrzeugbauteile" beziehenden Verfahren eingesetzt werden.

Die zu verbindenden Fahrzeugbauteile bzw. Nichtfahrzeugbauteile werden zunächst aneinander gesetzt und zusammengesteckt. Im zusammengesteckten Zustand werden sie, ähnlich wie dies von Steckbaukästen aus dem Spielwarenbereich bekannt ist, durch einzelne "Klemmelemente" zusammengehalten und auf diese Weise relativ zueinander (vor-)fixiert.

Das Vorpositionieren bzw. Vorfixieren erfolgt mittels mindestens einer "ersten lösbaren Bauteilverbindung" an einer "ersten Verbindungsstelle" und mittels mindestens einer "zweiten lösbaren Bauteilverbindung" an einer von der ersten Verbindungsstelle beabstandeten "zweiten Verbindungsstelle". Die Fahrzeugbauteile bzw. Nichtfahrzeugbauteile können auch durch mehrere "erste Bauteilverbindungen" und/oder mehrere "zweite Bauteilverbindungen" (vor-)montiert werden.

An einer "ersten Verbindungsstelle" sind die beiden Fahrzeugbauteile bzw. Nichtfahrzeugbauteile unverschieblich miteinander verbunden. An einer "zweiten Verbindungsstelle" hingegen sind sie in einer Verschieberichtung verschieblich relativ zueinander miteinander verbunden werden.

Ein wesentlicher Vorteil einer derartigen Bauteilvorfixierung ist darin zu sehen, dass die beiden zu fügenden Fahrzeugbauteile bzw. Nichtfahrzeugbauteile "schwimmend" vorfixiert sind. "Schwimmend" bedeutet, dass die zweite Bauteilverbindung eine gewisse Relativverschiebung der beiden Bauteile ermöglicht. Die erste Bauteilverbindung kann dabei als "Festlager" und die zweite Bauteilverbindung als "Verschiebe- bzw. Loslager" interpretiert werden, das eine Relativverschiebung in mindestens einer konstruktiv vorgegebenen Richtung ermöglicht. Die zweite Bauteilverbindung ist vorzugsweise derart gestaltet und angeordnet, dass ihr Verschiebefreiheitsgrad ermöglicht, dass sich bei einem Schweißprozess auftretende Wärmedehnungen weitgehend ungehindert entfalten können. Unbeabsichtigte Veränderungen des Fügespalts werden somit vermieden, was eine qualitativ hochwertige Schweißverbindung ermöglicht.

Auch bei einer schwimmenden Vorfixierung kann vorgesehen sein, dass die beiden Fahrzeugbauteile bzw. Nichtfahrzeugbauteile in ihrer Gesamtheit betrachtet nach dem Zusammenstecken an den Fixierelementen in Richtungen, die quer zur Einführrichtung in sind, spielfrei miteinander verbunden, d.h. in ihrer Gesamtheit unverschieblich relativ zueinander fixiert sind.

Zusätzlich zu einer Klemmverbindung kann zwischen den Fixierelementen ein in Einführrichtung wirkender Formschluss vorgesehen sein, insbesondere ein "Hinterschnitt" des männlichen und des weiblichen Fixierelements. Ein derartiger Formschluss muss aber nicht notwendigerweise vorgesehen sein.

Erfindungsgemäß wird mindestens eine der mindestens zwei "Steck- bzw. Klemmverbindungen" (Bauteilverbindungen) gebildet durch ein von einem der beiden Fahrzeugbauteile bzw. Nichtfahrzeugbauteile abstehendes "männliches" Fixierelement und ein an dem anderen Fahrzeugbauteil bzw. Nichtfahrzeugbauteil vorgesehenes "weibliches" Fixierelement, das zur Aufnahme des männlichen Fixierelements vorgesehen ist. Durch Einführen des männlichen Fixierelements in einer Einführvorrichtung in das weibliche Fixierelement kann an den beiden Fixierelementen eine Klemmverbindung zwischen den beiden Fahrzeugbauteilen bzw. Nichtfahrzeugbauteilen hergestellt werden. Die beiden Bauteile sind also reibschlüssig und/oder formschlüssige aneinander bzw. relativ zueinander fixiert.

Gemäß der Erfindung weist das männliche Fixierelement teilweise oder ganz die Form einer Kugel bzw. einer Kugelkalotte oder teilweise oder ganz eine kugelähnliche Form auf. Bei dem männlichen Fixierelement kann es sich insbesondere um eine Kugel oder um eine Kugelkalotte aus Vollmaterial handeln, insbesondere um eine Stahl- oder Aluminiumkugel. Prinzipiell könnte das männliche Fixierelement auch aus einem anderen Material wie z. B. Kunststoff bestehen.

Der Begriff "Kugel" bzw. "kugelähnlich" ist äußerst breit zu interpretieren und nicht auf den mathematischen Begriff einer Kugel- oder Kugelkalottengeometrie beschränkt. Die Begriffe "Kugel" bzw. "Kugelähnlich" können z. B. im Sinne von "konvex gewölbt" interpretiert werden. Sie umfassen ganz allgemein "runde" bzw. "gewölbte", insbesondere "konvex gewölbte" Geometrien".

Vorzugsweise ist das kugelförmig oder kugelähnlich gestaltete männliche Fixierelement rotationssymmetrisch bezüglich einer Normalenrichtung eines oder beider Fahrzeugbauteile bzw. Nichtfahrzeugbauteile an der Stelle des männlichen Fixierelements.

Ein derart gestaltetes männliches Fixierelement kann sehr einfach mit dem zweiten Fahrzeugbauteil bzw. Nichtfahrzeugbauteil zusammengesteckt werden. Durch eine runde, kantenlose oder weitgehend kantenlose Geometrie des männlichen Fixierelements minimiert sich die Gefahr, dass sich die beiden Fahrzeugbauteile bzw. Nichtfahrzeugbauteile beim Zusammenstecken an ihren Fixierelementen ungewollt verhaken bzw. verkanten.

Der Begriff "weibliches Fixierelement" ist ebenfalls äußerst breit auszulegen. Umfasst sind grundsätzlich alle konstruktiven Gestaltungen, die es ermöglichen, das männliche Fixierelement in einer Einführrichtung aufzunehmen und festzuklemmen.

Gemäß der Erfindung weist das männliche Fixierelement ein zumindest geringes Übermaß in Bezug auf das weibliche Fixierelement auf. Ein Übermaß kann insbesondere in einer Richtung vorgesehen sein, die senkrecht zur Einführrichtung ist. Aufgrund des Übermaßes bleiben die beiden Fahrzeugbauteile bzw. Nichtfahrzeugbauteile nach dem Zusammenstecken an den Fixierelementen lösbar zusammengeklemmt. Um ein Zusammenstecken zu ermöglichen und im zusammengesteckten Zustand eine hinreichende Klemmkraft aufrecht erhalten zu können, müssen die beiden Fixierelemente - oder zumindest eines der beiden Fixierelemente - eine gewisse "Mindestelastizität" aufweisen. Wird als männliches Fixierelement eine "Vollkugel" bzw. "Vollkugelkalotte" mit vergleichsweise geringer Elastizität verwendet, so kann die für ein Zusammenstecken erforderliche Mindestelastizität durch eine entsprechend elastische Gestaltung des weiblichen Fixierelements erreicht werden.

Das weibliche Fixierelement kann durch ein in dem zweiten Fahrzeugbauteil bzw. Nichtfahrzeugbauteil vorgesehenes "Durchgangsloch" gebildet sein. Der Begriff "Durchgangsloch" ist breit zu interpretieren und nicht per se auf eine bestimmte Lochgeometrie beschränkt. Das Durchgangsloch kann z.B. kreisförmig sein oder eine von einer Kreisform abweichende Geometrie aufweisen, wie z.B. eine im Wesentlichen quadratische Geometrie, eine drei-, vier- oder mehreckförmige Geometrie, wobei die "Ecken" (aus-)gerundet sein können.

Wie bereits erwähnt, können die beiden Fahrzeugbauteile bzw. Nichtfahrzeugbauteile über mehrere derartige Bauteilverbindungen relativ zueinander (vor-)fixiert werden. Dementsprechend kann an einem der beiden ahrzeugbauteile bzw. Nichtfahrzeugbauteile mindestens ein "weiteres männliches Fixierelement" vorgesehen sein, das ebenfalls teilweise oder ganz die Form einer Kugel bzw. teilweise oder ganz eine kugelähnliche Form hat und das in einer bzw. in derselben Einführrichtung wie das erste männliche Fixierelement in ein zugeordnetes "weiteres weibliches Fixierelement" eingeführt werden kann bzw. eingeführt ist, das an dem betreffenden anderen Fahrzeugbauteil bzw. Nichtfahrzeugbauteile vorgesehen ist.

Das mindestens eine weitere weibliche Fixierelement kann durch einen Schlitz bzw. durch ein längliches Durchgangsloch gebildet sein, in dem das weitere männliche Fixierelement in einer Längsrichtung des Schlitzes bzw. des länglichen Durchgangslochs verschieblich ist.

Nach einer Weiterbildung der Erfindung ist an einem Rand des das weibliche Fixierelement bildenden Durchgangslochs mindestens ein von dem zweiten Fahrzeugbauteil bzw. Nichtfahrzeugbauteil abstehendes, biegeelastisches Klemmelement vorgesehen. Das Klemmelement übt von außen her eine im Wesentlichen quer zur Einführrichtung wirkende Klemmkraft auf eine Außenseite des männlichen Fixierelements aus. Das Klemmelement kann das männliche Fixierelement hintergreifen. Dies muss aber nicht unbedingt der Fall sein. Im Falle eines Hinterschnitts kommt es beim Zusammenfügen, d.h. beim Zusammenstecken der beiden Fixierelemente zu einem "Überdrücken" und somit zu einem hörbaren Einrasten des männlichen Fixierelements in bzw. an dem weiblichen Fixierelement.

Bei dem Klemmelement kann es sich um einen sich entlang des gesamten Rands des Durchgangslochs erstreckenden Klemmkragen handeln. Alternativ dazu kann auch lediglich ein sich über einen Umfangsabschnitt erstreckendes Klemmkragenelement vorgesehen sein. Ferner können entlang des Durchgangslochs mehrere in Umfangsrichtung voneinander beabstandete Klemmkrägen vorgesehen sein, die das männliche Fixierelement jeweils auf einem Umfangsabschnitt oder jeweils an einer Umfangsstelle von außen her berühren. Es kann auch vorgesehen sein, dass lediglich ein Teil der vorgesehenen Klemmkrägen von außen her gegen das männliche Fixierelement drückt.

Ferner kann vorgesehen sein, dass der Klemmkragen bzw. die Klemmkrägen in Einführrichtung bzw. entgegen der Einführrichtung von dem zweiten Fahrzeugbauteil bzw. Nichtfahrzeugbauteil absteht bzw. abstehen. Der mindestens eine Klemmkragen muss nicht ganz senkrecht in Bezug auf das zweite Fahrzeugteil stehen, sondern kann leicht schräg angestellt werden. Beispielsweise kann vorgesehen sein, dass der mindestens eine Klemmkragen mit der Oberfläche des zweiten Fahrzeugbauteils einen Winkel im Bereich einschließt, der im Bereich zwischen 80° und 90° liegt.

Bei dem ersten und/oder bei dem zweiten Fahrzeugbauteil bzw. Nichtfahrzeugbauteile kann es sich um ein Blechbauteil handeln. Im Falle eines Fahrzeugbauteils kann es sich insbesondere um ein Karosseriebauteil handeln. Das das weibliche Fixierelement bildende Durchgangsloch kann aus dem zweiten Fahrzeugbauteil bzw. Nichtfahrzeugbauteil ausgestanzt sein. Bei dem Klemmkragen kann es sich um einen "umgebogenen" bzw. "hochgestellten" Abschnitt des ausgestanzten Durchgangslochs handeln. Bei einem oder bei beiden der Fahrzeugteile bzw. Nichtfahrzeugbauteile kann es sich insbesondere um Tiefziehteile handeln. Das mindestens eine weibliche Fixierelement, das z. B. durch ein Durchgangsloch gebildet sein kann, kann unmittelbar im Tiefziehwerkzeug ausgestanzt oder in einem nachfolgenden Fertigungsschritt hergestellt werden.

Die beiden vorfixierten Fahrzeugbauteile bzw. Nichtfahrzeugbauteile werden nach der Vorfixierung fest miteinander verbunden, z. B. in einem "einseitigen Fügeverfahren". Einseitige Fügeverfahren haben den Vorteil, dass die Fügestelle bzw. der Fügebereich nur von einer Seite her und nicht notwendigerweise von beiden (gegenüberliegenden) Seiten her zugänglich sein muss, was aus Platzgründen gerade im Karosseriebau nicht immer der Fall ist.

Erfindungsgemäß werden die beiden vorfixierten Fahrzeugbauteile bzw. Nichtfahrzeugbauteile über eine längliche Schweißnaht dauerhaft fest miteinander verbunden. Zur Vermeidung von Wärmespannungen während des Schweißens sollte der Verschiebefreiheitsgrad der zweiten Bauteilverbindung(en) im Wesentlichen parallel, insbesondere koaxial zur Längsrichtung der Schweißnaht sein, so dass die beim Verschweißen auftretende Hauptdehnungsrichtung parallel zur Richtung des Verschiebefreiheitsgrads ist.

Erfindungsgemäß werden die beiden Fahrzeugbauteile bzw. Nichtfahrzeugbauteile mittels eines fokussierten Laserstrahls (Laserstrahlschweißen) miteinander verschweißt. Laserschweißen ist ein thermisches Fügeverfahren, bei dem über einen Laserstrahl thermische Energie in die zu verschweißenden Bauteile eingebracht wird. Da der Laserstrahl stark fokussiert ist, schmelzen die beiden Bauteile nur lokal auf und verschweißen an der Aufschmelzstelle miteinander. Die Energiedichte wird dabei durch die Laserleistung, die Fokussierung des Laserstrahls und durch die relative Bewegung des Laserstrahls zum Werkstück eingestellt. Die Bewegung kann "konventionell" durch Bewegung der Schweißoptik und/oder durch Strahlablenkung über einen oder mehrere Spiegel erfolgen. Im Unterschied zum Widerstandspunktschweißverfahren muss beim Laserschweißen der "Bauteilverbund" nicht von beiden Seiten her mittels einer Schweißzange zugänglich sein. Vielmehr kann von einer einzigen Seite her gearbeitet werden.

Bei einem oder bei beiden der Fahrzeugbauteile bzw. Nichtfahrzeugbauteile kann es sich um Bauteile aus Metall (Blechbauteil(e)) oder aus Kunststoff, insbesondere aus einem faserverstärkten Kunststoff (z. B. Kohlefaserbauteil(e), Glasfaserbauteil(e) o. ä.) handeln.

Zusammenfassend ist festzustellen, das Verfahren gemäß der Erfindung im Automobilbaubereich, der bereits heute hochautomatisiert ist, signifikante Kosteneinsparungen ermöglicht. Aber auch in Bereichen außerhalb des Automobilbaus bzw. in Bereichen, in denen eine Automatisierung bislang als zu kostspielig erschien, bietet die Erfindung die Möglichkeit, bislang nicht oder kaum automatisierte Fertigungsvorgänge von Grund auf neu zu konzipieren und zu automatisieren, was mit einem hohen Kostensenkungspotenzial verbunden ist. Das erfindungsgemäße Verfahren kann somit in einer Vielzahl von Bereichen als sehr kostengünstiges geometrieunspezifisches, vorrichtungsfreies "Standard-Verbindungsverfahren" etabliert werden.

Im Folgenden wird die Erfindung im Zusammenhang mit der Zeichnung näher erläutert. Es zeigen:
- Figur 1: Ein Blech mit einer aufgeschweißten Stahlkugel;
- Figuren 2, 3: ein Blech mit einem Durchgangsloch mit umlaufenden Klemmkragen;
- Figuren 4-6: verschiedene Ausführungsbeispiele mit unterschiedlichen Klemmkrägen; und
- Figur 7: zwei schwimmend aneinander fixierte Bauteile; und
- Figur 8: das Grundprinzip der Erfindung zweier durch Laserstrahlschweißen miteinander zu verbindender Fahrzeugbauteile.

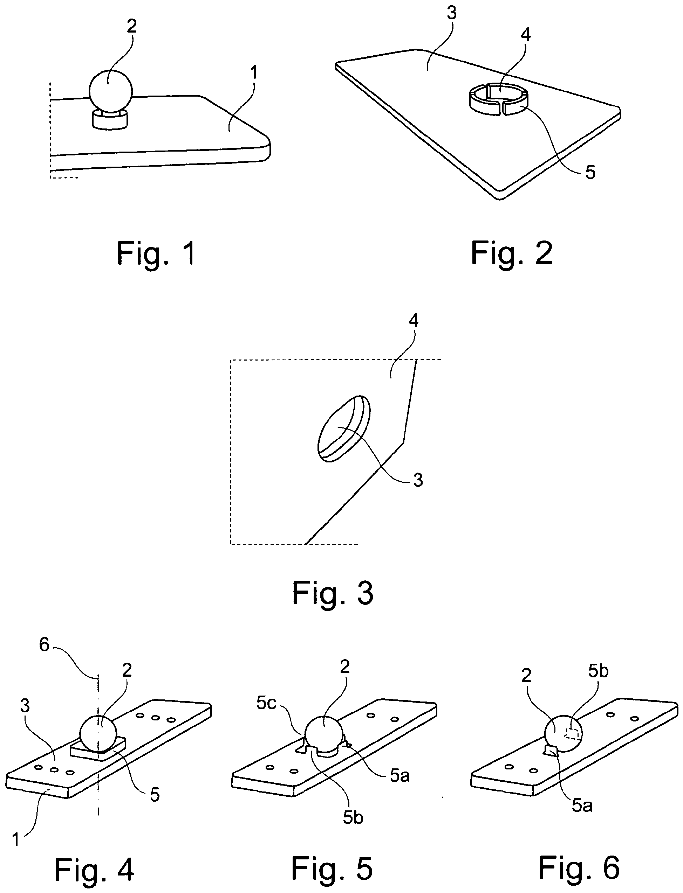

Figur 1 zeigt ein erstes Blech 1, auf das eine Stahlkugel 2 aufgeschweißt ist.

Die Figuren 2, 3 zeigen ein zweites Blech 3, in das ein Durchgangsloch 4 gestanzt ist, welches einen umgebogenen Kragen 5 aufweist, der als Klemmkragen fungiert. Das Durchgangsloch 4 bzw. der Klemmkragen 5 haben einen geringfügig kleineren Durchmesser als die Kugel 2. Der Klemmkragen ist jedoch hinreichend elastisch, so dass die Kugel in das bzw. durch das Durchgangsloch 4 hindurch gesteckt werden kann.

Das Durchgangsloch 4 kann, wie in den Figuren 2, 3 gezeigt, eine annähernd viereckige bzw. quadratische Form haben. Im Falle einer annähernd quadratischen Druchgangslochgeometrie, drückt der Klemmkragen 5 punktförmig an vier jeweils ca. 90° voneinander beabstandeten Stellen von außen her gegen die Kugel 2.

Figur 4 zeigt die beiden Bleche 1, 3 in zusammengestecktem Zustand. Die an dem Blech 1 fixierte Kugel wurde von unten her durch das Durchgangsloch 4 hindurchgesteckt. Der Klemmkragen 5 drückt im Wesentlichen quer zu einer Einführrichtung 6 von außen her gegen die Kugel 2. Die beiden Bleche 1, 3 sind damit in Richtungen, die quer zur Einführvorrichtung 6 sind, fest und im Wesentlichen spielfrei relativ zueinander positioniert.

Figur 5 zeigt ein Ausführungsbeispiel, bei dem anstatt eines umlaufenden Klemmkragens in Umfangsrichtung gleichmäßig verteilt mehrere zahnartige Klemmkragenelemente 5a, 5b, 5c vorgesehen sind.

Beim Ausführungsbeispiel der Figur 6 sind lediglich zwei derartige zahnartige Klemmkragenelemente 5a, 5b vorgesehen, die in Umfangsrichtung ca. 180° voneinander beabstandet sind. Die beiden Klemmkragenelemente 5a, 5b sind auf einander gegenüberliegenden Seiten der Kugel 2 angeordnet.

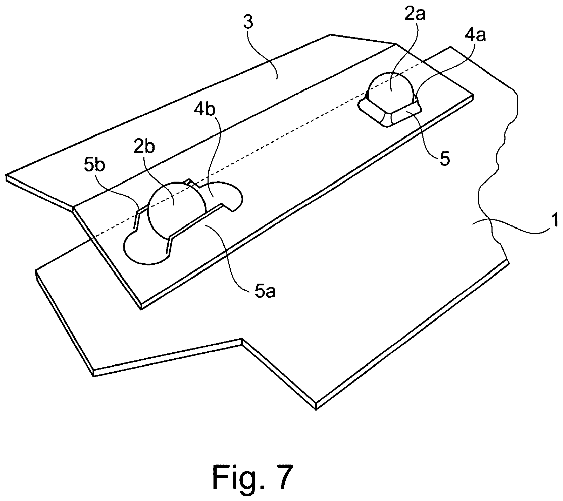

Figur 7 zeigt ein Ausführungsbeispiel, bei dem auf einem ersten Blech 1 beabstandet voneinander eine erste Kugel 2a und eine zweite Kugel 2b angeordnet sind. Die beiden Kugeln 2a, 2b können auf das Blech 1 aufgeschweißt sein.

In dem zweiten Blech 3 ist ein erstes der Kugel 2a zugeordnetes rechteckiges bzw. quadratisches Durchgangsloch 4a vorgesehen, das einen umlaufenden Klemmkragen 5 aufweist, ähnlich wie er in den Figuren 2 - 4 gezeigt ist. Im Bereich der Kugel 2a sind die beiden Bleche 1, 3 somit fest quer zur Einführrichtung relativ zueinander fixiert.

Bei dem zweiten Durchgangsloch 4b hingegen handelt es sich um ein längliches Durchgangsloch, mit zwei in Lochlängsrichtung verlaufenden Klemmkrägen 5a, 5b, die voneinander gegenüberliegenden Seiten her gegen die Außenseite der Kugel 2b drücken. Bei der in Figur 7 gezeigten Anordnung sind die Bleche "schwimmend" aneinander fixiert. Durch das Langloch 4b werden Spannungen zwischen den Befestigungsstellen vermieden.

Die beiden Bleche 1, 3 können einfach zusammengesteckt und anschließend z.B. durch Schweißen dauerhaft fest miteinander verbunden werden. Die beim Schweißen auftretenden Wärmedehnungen werden aufgrund der schwimmenden Anordnung der beiden Bleche "automatisch" ausgeglichen.

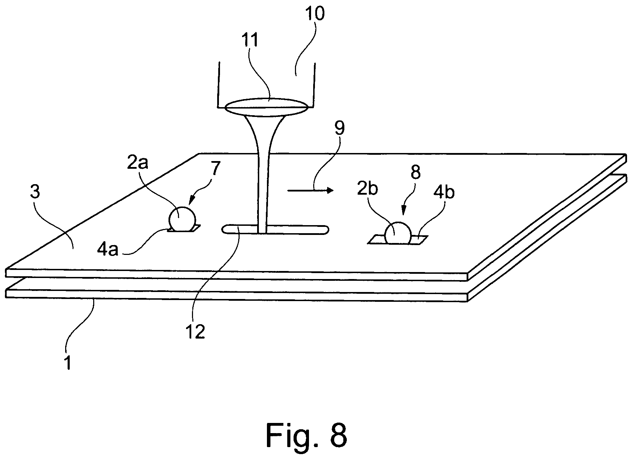

Figur 8 zeigt ein Ausführungsbeispiel, sehr ähnlich zu dem der Figur 7. Eine erste Bauteilverbindung 7 ist durch eine auf das Blech 1 aufgeschweißte Kugel 2a gebildet, die durch ein in dem zweiten Blech 3 vorgesehenes rechteckiges bzw. quadratisches Durchgangsloch 4a hindurchgesteckt ist. Eine zweite Bauteilverbindung 8 ist durch eine auf das erste Blech 1 aufgeschweißte Kugel 2b gebildet, welche durch das längliche Durchgangsloch 4b gesteckt ist.

Die beiden Bleche sind somit in Richtung des Pfeils 9 schwimmend vorfixiert. Mittels einer Laserschweißeinrichtung 10, die eine Fokussieroptik 11 aufweist, wird eine Schweißnaht 12 erzeugt, die parallel zu der Richtung des Pfeils 9 ist. Die Schweißnaht 12 wird hier im Bereich zwischen den beiden Bauteilverbindungen 7, 8 erzeugt. Die beim Laserschweißen auftretenden Wärmedehnungen können aufgrund der schwimmenden Fixierung der beiden Bleche 1, 3 problemlos ausgeglichen werden.

## Patentansprüche

1. Verfahren zum Verbinden eines ersten Fahrzeugbauteils (1) mit einem zweiten Fahrzeugbauteil (3), mit folgenden Schritten:
- Aneinandersetzen und Vorfixieren der beiden Fahrzeugbauteile (1, 3), wobei diese an mindestens einer ersten Verbindungsstelle mittels einer ersten lösbaren Bauteilverbindung (7) zusammengesteckt und unverschieblich miteinander verbunden werden und an mindestens einer zweiten Verbindungsstelle mittels einer zweiten lösbaren Bauteilverbindung (8) zusammengesteckt und in einer Verschieberichtung (9) verschieblich relativ zueinander miteinander verbunden werden,
und
- fest Verbinden der vorfixierten Fahrzeugbauteile (1, 3) durch Verschweißen,
wobei mindestens eine der beiden Bauteilverbindungen (7, 8) hergestellt wird durch
- ein von einem der beiden Fahrzeugbauteile (1) abstehendes männliches Fixierelement (2a, 2b), das teilweise oder ganz die Form einer Kugel oder teilweise oder ganz eine kugelähnliche Form hat, und
- ein an dem anderen Fahrzeugbauteil (3) vorgesehenes weibliches Fixierelement (4a, 4b), das zur Aufnahme des männlichen Fixierelements (2a, 2b) vorgesehen ist, wobei durch Einführen des männlichen Fixierelements (2a, 2b) in einer Einführrichtung (6) in das weibliche Fixierelement (4a, 4b) eine Klemmverbindung der beiden Fixierelemente (2a, 4a; 2b, 4b) hergestellt wird,
**dadurch gekennzeichnet, dass**
das Verschweißen mittels eines fokussierten Laserstrahls erfolgt und
beim Verschweißen eine längliche Schweißnaht (12) erzeugt wird, die im Wesentlichen parallel, insbesondere koaxial zu der Verschieberichtung (9) ist.

2. Verfahren nach Anspruch 1,
**dadurch gekennzeichnet, dass** die zweite Bauteilverbindung (8) derart gestaltet wird, dass beim fest Verbinden auftretende Wärmedehnungen sich in Verschieberichtung (9) entfalten können.

3. Verfahren nach Anspruch 1 oder 2,
**dadurch gekennzeichnet, dass** das männliche Fixierelement (2) im Wesentlichen quer zu Einführvorrichtung (6) ein Übermaß in Bezug auf das weibliche Fixierelement (4, 5) aufweist, so dass die beiden Fahrzeugbauteile (1, 3) an den Fixierelementen (2, 4, 5) aneinander geklemmt werden.

4. Verfahren nach einem der Ansprüche 1 bis 3,
**dadurch gekennzeichnet, dass** weibliche Fixierelement (4, 5) durch ein in dem zweiten Fahrzeugbauteil (3) vorgesehenes Durchgangsloch (4) gebildet ist.

5. Verfahren nach Anspruch 4,
**dadurch gekennzeichnet, dass** das Durchgangsloch (4) eine von einer Kreisform abweichende Form hat.

6. Verfahren nach einem der Ansprüche 4 oder 5,
**dadurch gekennzeichnet, dass** die Form des Durchgangslochs (4) einem Mehreck, insbesondere einem Dreieck, Rechteck bzw. Quadrat ähnelt.

7. Verfahren nach einem der Ansprüche 1 bis 6,
**dadurch gekennzeichnet, dass** die beiden Fahrzeugbauteile (1, 3) im Bereich der Fixierelemente (2, 4, 5) in Richtungen quer zur Einführrichtung (6) unverschieblich relativ zueinander fixiert sind.

8. Verfahren nach einem der Ansprüche 1 bis 7,
**dadurch gekennzeichnet, dass** das weibliche Fixierelement (4b) durch einen Schlitz bzw. durch ein längliches Durchgangsloch gebildet ist, in dem das zugeordnete männliche Fixierelement (2b) in einer Längsrichtung des Schlitzes bzw. des länglichen Durchgangslochs (4b) verschiebbar ist.

9. Verfahren nach einem der Ansprüche 4 bis 7,
**dadurch gekennzeichnet, dass** an einem Rand des Durchgangslochs (4, 4a, 4b) mindestens ein von dem zweiten Fahrzeugbauteil (3) abstehendes, biegeelastisches Klemmelement (5, 5a, 5b, 5c) vorgesehen ist, das von außen her eine im Wesentlichen quer zur Einführrichtung (6) wirkende Klemmkraft auf eine Außenseite des männlichen Fixierelements (2, 2a, 2b) ausübt.

10. Verfahren nach Anspruch 9,
**dadurch gekennzeichnet, dass** das Klemmelement (5, 5a, 5b, 5c) das zugeordnete männliche Fixierelement (2, 2a, 2b) formschlüssig hintergreift.

11. Verfahren nach einem der Ansprüche 9 oder 10,
**dadurch gekennzeichnet, dass** es sich bei dem Klemmelement (5) um einen sich entlang des gesamten Rands des Durchgangslochs (4) erstreckenden Klemmkragen (5) handelt.

12. Verfahren nach einem der Ansprüche 9 oder 10,
**dadurch gekennzeichnet, dass** entlang des Rands des Durchgangslochs (5) mehrere in Umfangsrichtung voneinander beabstandete Klemmkrägen (5a, 5b, 5c) vorgesehen sind, die auf einem Umfangsabschnitt das männliche Fixierelement (2, 2a, 2b) von außen her berühren.

13. Verfahren nach einem der Ansprüche 11 oder 12,
**dadurch gekennzeichnet, dass** der Klemmkragen bzw. die Klemmkrägen (5, 5a, 5b, 5c) in einer Einführrichtung (6) bzw. entgegen der Einführrichtung (6) von dem zweiten Fahrzeugbauteil (3) absteht bzw. abstehen.

14. Verfahren nach einem der Ansprüche 1 bis 13,
**dadurch gekennzeichnet, dass** es sich bei dem ersten und/oder bei dem zweiten Fahrzeugbauteil um ein Blechbauteil, insbesondere um ein Stahl- oder Aluminiumbauteil, handelt.

15. Verfahren nach einem Ansprüche 1 bis 14,
**dadurch gekennzeichnet, dass** es sich bei dem ersten und/oder bei dem zweiten Fahrzeugbauteil um ein Karosseriebauteil handelt.

16. Verfahren nach einem der Ansprüche 4 bis 15,
**dadurch gekennzeichnet, dass** das Durchgangsloch (4, 4a, 4b) aus dem zweiten Fahrzeugbauteil (3) ausgestanzt wird.

17. Verfahren nach einem der Ansprüche 11 bis 16,
**dadurch gekennzeichnet, dass** es sich bei dem mindestens einen Klemmkragen (5, 5a, 5b, 5c) um einen umgebogenen Abschnitt des zweiten Fahrzeugbauteils (3) handelt.

18. Verfahren nach einem der Ansprüche 1 bis 17,
**dadurch gekennzeichnet, dass** es sich bei dem männlichen Fixierelement (2a, 2b) um ein vollständig aus Metall, insbesondere aus Stahl oder Aluminium bestehendes Element handelt.

19. Verfahren nach einem der Ansprüche 1 bis 18,
**dadurch gekennzeichnet, dass** das männliche Fixierelement (2, 2a, 2b) stoffschlüssig mit dem ersten Fahrzeugbauteil (1) verbunden ist, insbesondere dass das männliche Fixierelement (2, 2a, 2b) an das erste Fahrzeugbauteil (1) angeschweißt ist.

20. Verfahren zum Verbinden eines ersten Nichtfahrzeugbauteils (1) mit einem zweiten Nichtfahrzeugbauteil (3), mit folgenden Schritten:
- Aneinandersetzen und Vorfixieren der beiden Nichtfahrzeugbauteile (1, 3), wobei diese an mindestens einer ersten Verbindungsstelle mittels einer ersten lösbaren Bauteilverbindung (7) zusammengesteckt und unverschieblich miteinander verbunden werden und an mindestens einer zweiten Verbindungsstelle mittels einer zweiten lösbaren Bauteilverbindung (8) zusammengesteckt und in einer Verschieberichtung (9) verschieblich relativ zueinander miteinander verbunden werden,
wobei mindestens eine der beiden Bauteilverbindungen (7, 8) hergestellt wird durch
- ein von einem der beiden Nichtfahrzeugbauteile (1) abstehendes männliches Fixierelement (2a, 2b), das teilweise oder ganz die Form einer Kugel oder teilweise oder ganz eine kugelähnliche Form hat, und
- ein an dem anderen Nichtfahrzeugbauteil (3) vorgesehenes weibliches Fixierelement (4a, 4b), das zur Aufnahme des männlichen Fixierelements (2a, 2b) vorgesehen ist, wobei durch Einführen des männlichen Fixierelements (2a, 2b) in einer Einführrichtung (6) in das weibliche Fixierelement (4a, 4b) eine Klemmverbindung der beiden Fixierelemente (2a, 4a; 2b, 4b) hergestellt wird,
**dadurch gekennzeichnet, dass**
die beiden Nichtfahrzeugbauteile (1, 3) durch Verschweißen mittels eines fokussierten Laserstrahls fest miteinander verbunden werden und
beim Verschweißen eine längliche Schweißnaht (12) erzeugt wird, die im Wesentlichen parallel, insbesondere koaxial zu der Verschieberichtung (9) ist.

## Claims

1. A method for connecting a first vehicle component (1) to a second vehicle component (3), having the following steps:
- placing the two vehicle components (1, 3) against each other and pre-fixing them, wherein they are fitted together and connected together in non-displaceable manner at at least a first connection point by means of a first detachable component connection (7) and are fitted together at at least a second connection point by means of a second detachable component connection (8) and are connected together in displaceable manner relative to each other in a direction of displacement (9),
and
- securely connecting the pre-fixed vehicle components (1, 3) by welding,
wherein at least one of the two component connections (7, 8) is produced by
- a male fixing element (2a, 2b) protruding from one of the two vehicle components (1) which partially or in its entirety is in the form of a sphere or partially or in its entirety has a sphere-like form, and
- a female fixing element (4a, 4b) provided on the other vehicle component (3) which is provided for receiving the male fixing element (2a, 2b), wherein a clamping connection of the two fixing elements (2a, 4a; 4b, 2b) is produced by introducing the male fixing element (2a, 2b) in a direction of introduction (6) into the female fixing element (4a, 4b),
**characterised in that**
the welding takes place by means of a focused laser beam, and
upon welding an elongate weld seam (12) is produced which is substantially parallel, especially coaxial, to the direction of displacement (9).

2. A method according to Claim 1,
**characterised in that** the second component connection (8) is configured such that thermal expansions occurring upon the secure connection can spread in the direction of displacement (9).

3. A method according to Claim 1 or Claim 2,
**characterised in that** the male fixing element (2) substantially transversely to the direction of introduction (6) has an oversize relative to the female fixing element (4, 5), so that the two vehicle components (1, 3) are clamped against each other on the fixing elements (2, 4, 5).

4. A method according to one of Claims 1 to 3,
**characterised in that** [the] female fixing element (4, 5) is formed by a through-hole (4) provided in the second vehicle component (3).

5. A method according to Claim 4,
**characterised in that** the through-hole (4) has a form which deviates from a circular form.

6. A method according to one of Claims 4 or 5,
**characterised in that** the form of the through-hole (4) is similar to a polygon, especially a triangle, rectangle or square.

7. A method according to one of Claims 1 to 6,
**characterised in that** the two vehicle components (1, 3) in the region of the fixing elements (2, 4, 5) are fixed so as to be non-displaceable relative to each other in directions transversely to the direction of introduction (6).

8. A method according to one of Claims 1 to 7,
**characterised in that** the female fixing element (4b) is formed by a slot or by an elongate through-hole in which the associated male fixing element (2b) is displaceable in a longitudinal direction of the slot or of the elongate through-hole (4b).

9. A method according to one of Claims 4 to 7,
**characterised in that** at least one flexurally elastic clamping element (5, 5a, 5b, 5c) protruding from the second vehicle component (3) is provided on an edge of the through-hole (4, 4a, 4b), which element from the outside exerts a clamping force acting substantially transversely to the direction of introduction (6) on an outer side of the male fixing element (2, 2a, 2b).

10. A method according to Claim 9,
**characterised in that** the clamping element (5, 5a, 5b, 5c) engages behind the associated male fixing element (2, 2a, 2b) in positive manner.

11. A method according to one of Claims 9 or 10,
**characterised in that** the clamping element (5) is a clamping collar (5) extending along the entire edge of the through-hole (4).

12. A method according to one of Claims 9 or 10,
**characterised in that** a plurality of clamping collars (5a, 5b, 5c) spaced apart from each other in the peripheral direction are provided along the edge of the through-hole (5), which collars on a peripheral portion contact the male fixing element (2, 2a, 2b) from the outside.

13. A method according to one of Claims 11 or 12,
**characterised in that** the clamping collar or the clamping collars (5, 5a, 5b, 5c) protrudes or protrude from the second vehicle component (3) in a direction of introduction (6) or counter to the direction of introduction (6).

14. A method according to one of Claims 1 to 13,
**characterised in that** the first and/or the second vehicle component is a sheet-metal component, especially a steel or aluminium component.

15. A method according to one of Claims 1 to 14,
**characterised in that** the first and/or the second vehicle component is a vehicle body component.

16. A method according to one of Claims 4 to 15,
**characterised in that** the through-hole (4, 4a, 4b) is punched out of the second vehicle component (3).

17. A method according to one of Claims 11 to 16,
**characterised in that** the at least one clamping collar (5, 5a, 5b, 5c) is a bent-over portion of the second vehicle component (3).

18. A method according to one of Claims 1 to 17,
**characterised in that** the male fixing element (2a, 2b) is an element consisting completely of metal, especially of steel or aluminium.

19. A method according to one of Claims 1 to 18,
**characterised in that** the male fixing element (2, 2a, 2b) is connected by a material-formed bond to the first vehicle component (1), especially **in that** the male fixing element (2, 2a, 2b) is welded onto the first vehicle component (1).

20. A method for connecting a first non-vehicle component (1) to a second non-vehicle component (3), having the following steps:
- placing the two non-vehicle components (1, 3) against each other and pre-fixing them, wherein they are fitted together and connected together in non-displaceable manner at at least a first connection point by means of a first detachable component connection (7) and are fitted together at at least a second connection point by means of a second detachable component connection (8) and are connected together in displaceable manner relative to each other in a direction of displacement (9),
wherein at least one of the two component connections (7, 8) is produced by
- a male fixing element (2a, 2b) protruding from one of the two non-vehicle components (1) which partially or in its entirety is in the form of a sphere or partially or in its entirety has a sphere-like form, and
- a female fixing element (4a, 4b) provided on the other non-vehicle component (3) which is provided for receiving the male fixing element (2a, 2b), wherein a clamping connection of the two fixing elements (2a, 4a; 2b, 4b) is produced by introducing the male fixing element (2a, 2b) in a direction of introduction (6) into the female fixing element (4a, 4b),
**characterised in that**
the two non-vehicle components (1, 3) are connected securely together by welding by means of a focused laser beam, and
upon welding an elongate weld seam (12) is produced which is substantially parallel, especially coaxial, to the direction of displacement (9).

## Revendications

1. Procédé de liaison d'une première pièce (1) de véhicule et d'une seconde pièce (3) de véhicule comprenant les étapes suivantes consistant à :
- positionner l'une sur l'autre et fixer préalablement les deux pièces de véhicule (1, 3), celles-ci étant emboitées sur au moins un premier emplacement de liaison au moyen d'une première liaison de pièces amovible (7), et reliées de façon non mobile en translation l'une par rapport à l'autre, et étant emboitées sur au moins un second emplacement de liaison au moyen d'une seconde liaison de pièces amovible (8) et reliées l'une à l'autre en étant mobiles en translation l'une par rapport à l'autre dans une direction de translation (9), et
- relier solidairement les pièces de véhicule (1, 3) préalablement fixée par soudage,
au moins l'une des deux liaisons de pièces (7, 8) étant obtenue par :
- un élément de fixation mâle (2a, 2b) s'écartant de l'une des deux pièces de véhicule (1) et qui a partiellement ou en totalité la forme d'une sphère ou une forme sphéroïdale, et
- un élément de fixation femelle (4a, 4b) situé sur l'autre pièce de véhicule (3) et qui est destiné à recevoir l'élément de fixation mâle (2a, 2b), l'introduction de l'élément de fixation mâle (2a, 2b) dans une direction d'introduction (6) dans l'élément de fixation femelle (4a, 4b) permettant d'obtenir une liaison par serrage des deux éléments de fixation (2a, 4a, 2b, 4b),
**caractérisé en ce que**
le soudage est effectué au moyen d'un faisceau laser focalisé, et lors du soudage on obtient un cordon de soudure longitudinal (12) qui est essentiellement parallèle en particulier coaxial à la direction de translation (9).

2. Procédé conforme à la revendication 1,
**caractérisé en ce que**
la seconde liaison de pièces (8) est réalisée de sorte que, les dilatations thermiques apparaissant lors de la liaison fixe puissent se déployer dans la direction de translation (9).

3. Procédé conforme à la revendication 1 ou 2,
**caractérisé en ce que**
l'élément de fixation mâle (2) comporte un excès par rapport à l'élément de fixation femelle (4, 5) essentiellement transversalement à la direction d'introduction (6) de sorte que les deux pièces de véhicule (1, 3) soient serrées l'une contre l'autre sur les éléments de fixation (2, 4, 5).

4. Procédé conforme à l'une des revendications 1 à 3,
**caractérisé en ce que**
l'élément de fixation femelle (4, 5) est formé par un perçage traversant (4) situé dans la seconde pièce de véhicule (3).

5. Procédé conforme à la revendication 4,
**caractérisé en ce que**
le perçage traversant (4) a une forme autre qu'une forme circulaire.

6. Procédé conforme à l'une des revendications 4 ou 5,
**caractérisé en ce que**
la forme du perçage (4) circulaire est similaire à un polygone, en particulier un triangle, un rectangle ou un carré.

7. Procédé conforme à l'une des revendications 1 à 6,
**caractérisé en ce que**
les deux pièces de véhicule (1, 3) sont fixées en n'étant pas mobiles en translation l'une par rapport à l'autre, dans des directions transversales à la direction d'introduction (6) dans la zone des éléments de fixation (2, 4, 5).

8. Procédé conforme à l'une des revendications 1 à 7,
**caractérisé en ce que**
l'élément de fixation femelle (4b) est formé par une fente et/ou par un perçage traversant oblong dans (laquelle)lequel l'élément de fixation mâle (2b) associé est mobile en translation dans la direction longitudinale de la fente ou du perçage de traversant oblong (4b).

9. Procédé conforme à l'une des revendications 4 à 7,
**caractérisé en ce qu'**
il est prévu sur un bord du perçage traversant (4, 4a, 4b) au moins un élément de serrage élastiquement flexible (5, 5a, 5b, 5c) dépassant de la seconde pièce de véhicule (3), qui exerce à partir de l'extérieur, sur la face externe de l'élément de fixation mâle (2, 2a, 2b) une force de serrage agissant essentiellement transversalement à la direction d'introduction (6).

10. Procédé conforme à la revendication 9,
**caractérisé en ce que**
l'élément de serrage (5, 5a, 5b, 5c) vient en prise par une liaison par la forme à l'arrière de l'élément de fixation mâle associé (2, 2a, 2b).

11. Procédé conforme à l'une des revendications 9 à 10,
**caractérisé en ce que**
l'élément de serrage (5) est constitué par une collerette de serrage (5) s'étendant le long de la totalité du bord du perçage traversant (4).

12. Procédé conforme à l'une des revendications 9 à 10,
**caractérisé en ce qu'**
il est prévu le long du bord du perçage traversant (5) plusieurs collerettes de serrage (5a, 5b, 5c) situées à distance les unes des autres dans la direction périphérique qui viennent en contact par l'extérieur sur un segment de la périphérie de l'élément de fixation mâle (2, 2a, 2b).

13. Procédé conforme à l'une des revendications 11 et 12,
**caractérisé en ce que**
la ou les collerette(s) de serrage (5, 5a, 5b, 5c) s'écarte(nt) de la seconde pièce de véhicule (3) dans la direction introduction (6) ou à l'opposé de la direction d'introduction (6).

14. Procédé conforme à l'une des revendications 1 et 13,
**caractérisé en ce que**
la première pièce de véhicule et/ou la seconde pièce de véhicule est(sont) constituée(s) par une pièce en tôle, en particulier une pièce en acier ou en aluminium.

15. Procédé conforme à l'une des revendications 1 à 14,
**caractérisé en ce que**
la première pièce de véhicule et/ou la seconde pièce de véhicule est(sont) constituée(s) par une pièce de carrosserie.

16. Procédé conforme à l'une des revendication 4 à 15,
**caractérisé en ce que**
le perçage traversant (4, 4a, 4b) est estampé sur la seconde pièce de véhicule (3).

17. Procédé conforme à l'une des revendications 11 à 16,
**caractérisé en ce que**
la collerette de serrage (5, 5a, 5b, 5c) est constituée par une segment cintré de la seconde pièce de véhicule (3).

18. Procédé conforme à l'une des revendications 1 à 17,
**caractérisé en ce que**
l'élément de fixation mâle (2a, 2b) est un élément réalisé totalement en métal, en particulier en acier ou en aluminium.

19. Procédé conforme à l'une des revendications 1 à 18,
**caractérisé en ce que**
l'élément de fixation mâle (2, 2a, 2b) est relié par une liaison par la matière à la première pièce de véhicule (1), et en particulier l'élément de fixation mâle (2, 2a, 2b) est soudé sur le première pièce de véhicule (1).

20. Procédé de liaison d'une première pièce (1) autre qu'une pièce de véhicule et d'une seconde pièce (3) autre qu'une pièce de véhicule comprenant les étapes suivantes consistant à :
- positionner l'une sur l'autre et fixer préalablement deux pièces (1, 3) autre que des pièces de véhicule, celles-ci étant emboitées sur au moins un premier emplacement de liaison au moyen d'une première liaison de pièces amovible (7), et reliées l'une à l'autre de façon non mobile en translation, et étant emboitées sur au moins un second emplacement de liaison, au moyen d'une seconde liaison de pièces amovible (8) et reliées l'une à l'autre en étant mobiles en translation l'une par rapport à l'autre dans une direction de translation (9),
au moins l'une des deux liaisons de pièces (7, 8) étant réalisée par :
- un élément de fixation mâle (2a, 2b) s'écartant de l'une des deux pièces autres qu'une pièce de véhicule (1) et qui a partiellement ou en totalité la forme d'une sphère ou une forme sphéroïdale, et
- un élément de fixation femelle (4a, 4b) situé sur l'autre pièce autre qu'une pièce de véhicule (3), et qui est destinée à recevoir l'élément de fixation mâle (2a, 2b), l'introduction de l'élément de fixation mâle (2a, 2b) dans une direction d'introduction (6) dans l'élément de fixation femelle (4a, 4b) permettant d'obtenir une liaison par serrage des deux éléments de fixation (2a, 4a, 2b, 4b),
**caractérisé en ce que**
les deux pièces autres que des pièces de véhicule (1, 3) sont reliées solidairement l'une à l'autre par soudage au moyen d'un faisceau laser focalisé, et, lors du soudage on obtient un cordon de soudure longitudinal (12) qui est essentiellement parallèle, en particulier coaxial à la direction de translation (9).
